# EUROPÄISCHE PATENTSCHRIFT

(11) **EP 1 753 646 B1**
(45) Veröffentlichungstag und Bekanntmachung des Hinweises auf die Patenterteilung: **08.04.2009**
(21) Anmeldenummer: 05737851.5
(22) Anmeldetag: 14.04.2005
(51) Int. Cl.: B60S 1/38

(54) **WISCHBLATT**
WIPER BLADE
BALAI D'ESSUIE-GLACE

(30) Priorität: 28.05.2004 DE 102004026687; 22.10.2004 DE 102004051467
(43) Veröffentlichungstag der Anmeldung: 21.02.2007
(73) Patentinhaber: ROBERT BOSCH GMBH, 70442 Stuttgart (DE)
(72) Erfinder: BRAUN, Hans, B-3001 Leuven (BE); HERINCKX, Dirk, B-3350 Drieslinter (BE); OP'T ROODT, Inigo, B-3500 Hasselt (BE); BEELEN, Hans, B-3540 Herk de Stad (BE); VAN BEALEN, David, B-3020 Herent (BE); SAEVELS, Peter, B-3384 Attenrode (BE)
(86) Internationale Anmeldenummer: PCT/EP2005/051646
(87) Internationale Veröffentlichungsnummer: WO 2005/115813

(56) Entgegenhaltungen:
- WO-A-20/05092680
- DE-A1- 10 139 104
- DE-A1- 10 245 693

## Beschreibung

### Stand der Technik

Die Erfindung geht von einem Wischblatt nach dem Oberbegriff des Anspruchs 1 aus.

Aus der DE 101 13 680 A1 ist ein gelenkfreies Wischblatt bekannt, dessen Wischleiste aus einem elastomeren Werkstoff besteht und an ihrer Oberseite einen Spoiler besitzt. Dieser kann unmittelbar angeformt und aus dem gleichen Werkstoff bestehen wie die Wischleiste oder ein separates Bauteil aus einem geeigneten anderen Kunststoff sein. Der Spoiler kann allein oder zusammen mit Federschienen, die in seitliche Längsnuten des Profils der Wischleiste eingelegt sind, als Tragelement des Wischblatts dienen. An den Enden des Wischblatts sind Kappen aufgesetzt, deren Leitflächen in Längsrichtung des Wischblatts verlaufen und sich mit einem geringen Absatz an die Leitfläche des Spoilers anschließen. Durch die Leitflächen des Spoilers und der Endkappen presst der Fahrtwind das Wischblatt mit zunehmender Geschwindigkeit des Fahrzeugs vermehrt gegen die Fahrzeugscheibe, wenn er das Wischblatt im Wesentlichen quer zur Längsrichtung anströmt. Im mittleren Bereich des Wischblatts ist in einem Ausschnitt des Spoilers eine Anschlussvorrichtung nach dem so genannten "Sidelock-System" am Tragelement befestigt, bei dem der Wischarm im Bereich der Anschlussvorrichtung seitlich parallel zum Wischblatt verläuft. Es ist auch ein so genanntes "Overlock-System" bekannt, bei dem der Wischarm im Bereich der Anschlussvorrichtung oberhalb des Wischblatts verläuft. Die Anschlussvorrichtung besitzt an ihren Seitenteilen jeweils zwei Krallen, die die Federschienen des Tragelements seitlich umfassen und halten.

Aus der DE 100 25 710 A1 ist ein so genanntes gelenkfreies Wischblatt bekannt, das eine gummielastische Wischleiste mit einer Wischlippe besitzt. Zwischen der Wischlippe und einer Kopfleiste sind seitliche Längsnuten vorgesehen, in die als Tragelement Federschienen eingesetzt sind. Diese werden durch Brückenelement an ihren Enden und ein mittleres Anschlusselement zusammengehalten. Die Brückenelemente besitzen als Fixiermittel einen angeformten Fortsatz, der an seinem freien Ende mindestens einen zur Kopfleiste gerichteten Vorsprung aufweist. Bei der Montage wird der Fortsatz gegen die Kopfleiste gebogen, sodass der Vorsprung in die Kopfleiste eingreift und die Federschienen in Längsrichtung relativ zur Wischleiste fixiert. Die Brückenelemente werden schließlich mit Endkappen abgedeckt.
Ein Wischblatt mit den Merkmaler des Oberbegriffs is weiterhin aus der DE-A-102 45 693bekannt.
Vorteile der Erfindung

Nach der Erfindung weisen die Endkappen des Wischblatts lösbare Fixiermittel auf, die in eine Kopfleiste einer Wischleiste eingreifen, wobei die axiale Verschiebbarkeit der Federschienen des Wischblatts relativ zur Wischleiste durch die Endkappen begrenzt ist. Die Federschienen sind nicht unmittelbar an der Wischleiste fixiert, sondern mittelbar über die Endkappe. Nachdem die Endkappen bei der Demontage entfernt sind, kann die Wischleiste in einfacher Weise auch von einem Laien getauscht werden. Sollten dabei versehentlich die Fixiermittel beschädigt werden, kann die preiswerte Endkappe ersetzt werden. Die aufwändigen Federschienen sind stets wiederverwendbar.

In einer Ausgestaltung der Erfindung besteht die Endkappe im Wesentlichen aus einem Basisteil und einem schwenkbaren Deckel. Zur Montage wird zuerst das Basisteil mit geöffnetem Deckel auf das Ende der Wischleiste gefügt bis angeformte Rastnasen an der vom Ende der Wischleiste abgewandten Seite einer die beiden seitlichen Federschienen zusammenhaltenden Brücke verrasten. In dieser Position ist das Basisteil am Ende und in Längsrichtung der Federschienen fixiert. In einem zweiten Montageschritt wird dann der Deckel in seine Verschlussposition geschwenkt, in der er eine Öffnung des Basisteils vollständig verschließt, wodurch die Endkappe eine aerodynamisch günstige Form erhält und das Ende des Wischblatts vollständig abdeckt.

Der Deckel weist an seiner inneren Seite einen Nocken auf, der während der Schließbewegung auf eine Federzunge drückt, die im Bereich der Öffnung am Basisteil parallel zu einer Kopfleiste der Wischleiste angeordnet ist. Die Nocken sind so ausgebildet, dass sie während der Schließbewegung ein Maximum überschreiten, sodass der Deckel sich nicht selbsttätig öffnen kann. Durch die Nockenform kann die Betätigungskraft im Verhältnis zur Anpresskraft übersetzt werden. Die Federzunge besitzt an der von der Kopfleiste abgewandten Seite einen angeformten Verriegelungsdorn, der in der geschlossenen Stellung in die Kopfleiste gedrückt ist. In der Verschlussposition des Deckels sind die Federschienen dann durch den in die gummielastische Oberfläche der Kopfleiste eingreifenden, spitzen Verriegelungsdorn in Längsrichtung relativ zur Wischleiste fixiert, sodass nunmehr die Federschienen über die Endkappe zur Wischleiste fixiert sind. Zudem werden in der Verschlussposition die an der Brücke verrasteten Rastnasen durch Wangen an der Innenseite des Deckels verriegelt, sodass sich die Endkappe nicht ungewollt vom Wischblattende löst.

Die Endkappen sind sehr einfach zu demontieren. Dazu wird lediglich der Deckel aus der Verschlussposition geschwenkt, und zwar so weit, dass die Federzunge abhebt und der Verriegelungsdorn außer Eingriff kommt. Gleichzeitig wird in dieser Position die Verriegelung der Rastnasen gelöst, sodass das Basisteil der Endkappe vom Wischblattende geschoben werden kann. In diesem Zustand kann eine verschlissene Wischleiste entfernt und durch eine neue ersetzt werden. Da zur Wiederherstellung der Wischqualität nur die verschlissene Wischleiste ausgetauscht wird, aber der Spoiler, die Federschienen und die Endkappen wieder verwendet werden, entstehen für den Konsumenten wesentlich geringere Kosten als beim Austausch eines ganzen Wischblatts. Ferner fallen weniger Abfallprodukte an, wodurch die Umwelt entlastet wird.

Um die Demontage zu erleichtern und den Deckel dabei besser fassen zu können, besonders wenn dieser zum Beispiel durch abgelagerten Schmutz oder andere Umwelteinflüsse schwer schwenkbar ist, weist dieser mehrere Griffrillen auf. Außerdem besitzt die Federzunge an ihrer der Kopfleiste zugewandten Seite einen mittig angeordneten Demontagekeil, der durch seine Form beim Abziehen der Endkappe das Abheben der Federzunge unterstützt.
Das Basisteil und der Deckel bestehen vorzugsweise aus Kunststoff und werden bei großen Stückzahlen preisgünstig in einem Spritzgussverfahren hergestellt. Der gespritzte Deckel weist neben verschiedenen angeformten Rastmitteln stirnseitig eine offene Nabe auf. Auch das Basisteil besitzt nach dem Spritzgießen die endgültige, äußere Form und weist in der Öffnung die Federzunge mit dem Verriegelungsdorn sowie eine Achse zur Aufnahme des Deckels auf. Diese Achse ist abgeflacht und zwar derart, dass die offene Nabe 1 nur in geöffneter Stellung des Deckels montiert werden kann und beim Schwenken in die Verschlussposition verriegelt ist.

Bei einer weiteren Ausgestaltung der Erfindung ist der in die Kopfleiste eingreifende Verriegelungsdorn an einem zylindrischen Stopfen angeformt. Dieser wird nach dem Fügen des Ba-sisteils am Wischblattende in eine Aufnahmeöffnung des Basis- teils eingeschraubt. Dazu weist der Stopfen an seinem Umfang ein Steilgewinde auf, das zweckmäßigerweise durch nutförmige Aussparungen gebildet wird. In diese Nuten greifen an der Wand der Aufnahmeöffnung angeordnete Gegenstücke, beispielsweise Zapfen ein. Zum Einschrauben mittels eines Schraubendrehers weist der Stopfen an seiner Stirnfläche einen Schlitz auf. Im montierten Zustand greift der Verriegelungsdorn mit seiner Spitze in die Kopfleiste ein und liegt gleichzeitig mit der Mantelfläche an der vom Ende des Wischblatts abgewandten Seite der Brücke an, wodurch auch in dieser Ausgestaltung die Wischleiste, die Federschienen und die Endkappen fixiert sind. Um ein ungewolltes Lösen des Stopfens zu verhindern, wird dieser unter einer geringen Vorspannung montiert. Dazu sind die nutförmigen Aussparungen des Steilgewindes in einem Mantel angeordnet, der den Verriegelungsdorn in einem Abstand umgibt und einen Längsschlitz aufweist. Beim Einfügen des Stopfens in die Aufnahmeöffnung und Einfädeln der Zapfen in die nutförmigen Aussparungen wird der Mantel am Umfang geringfügig zusammengedrückt und liegt mit einer Vorspannung an deren Innenfläche an.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen:

Fig. 1 eine perspektivische Teilansicht eines Wischblattendes,
Fig. 2 ein Wischblattende nach Fig. 1 mit geöffneter Endkappe,
Fig. 3 ein Wischblattende nach Fig. 1 ohne Endkappe,
Fig. 4 eine Endkappe in einer Explosionsdarstellung,
Fig. 5 eine gute Endkappe in perspektivischer Darstellung von unten,
Fig. 6 bis 10 eine Variante zu einer Endkappe nach Fig. 1 bis 5 und
Fig. 11 bis Fig. 16 eine weitere Variante zu einer Endkappe nach Fig. 1 bis 5.

### Beschreibung der Ausführungsbeispiele

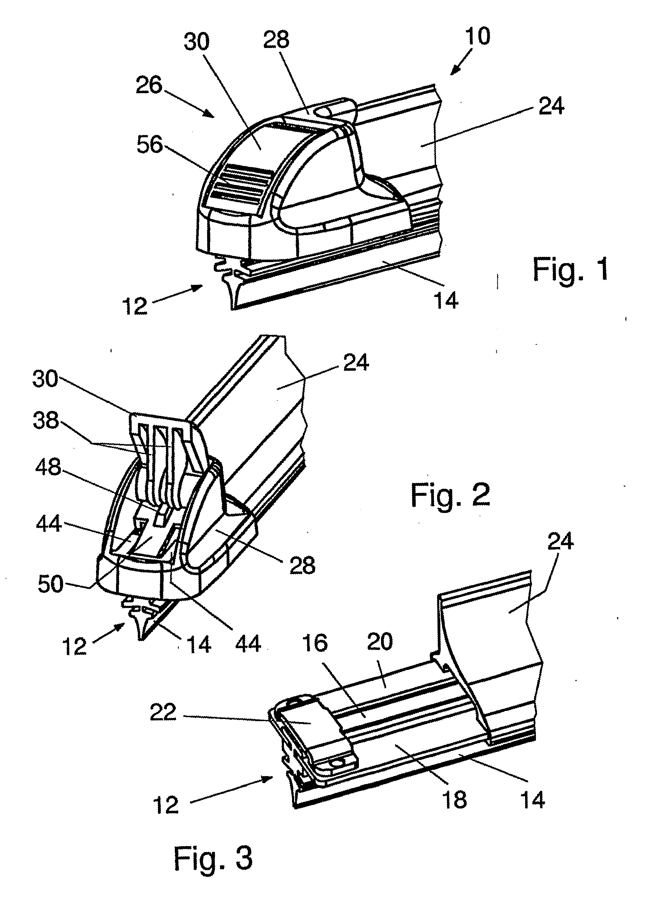

Von einem Scheibenwischer sind nur die Teile eines gelenkfreien Wischblatts 10 dargestellt, so weit sie für das Verständnis der Erfindung notwendig sind (Fig. 1). Das Wischblatt 10 weist eine Wischleiste 12 aus einem elastomeren Werkstoff auf, deren untere, einer nicht dargestellten Fahrzeugscheibe zugewandte Seite als Wischlippe 14 ausgebildet ist. Überdies besitzt das Wischblatt 10 oberhalb der Wischleiste 12 einen Spoiler 24. An den Enden des Wischblatts 10 sind Endkappen 26 aufgesetzt, deren Leitflächen in Längsrichtung des Wischblatts 10 verlaufen und sich mit einem geringen Absatz an die Leitfläche des Spoilers 24 anschließen, sodass das Wischblatt 10 in diesem Zustand eine aerodynamisch günstige Form besitzt.

Die Endkappe 26 ist zweiteilig ausgebildet und besteht in einer ersten Ausgestaltung aus einem Basisteil 28 und einem Deckel 30, der im montierten Zustand eine Verschlussposition einnimmt (Fig.1). Mit geöffnetem Deckel 30 ist das Basisteil 28 vom Ende der Wischleiste 12 abnehmbar, um bei schlechter Wischqualität die verschlissene Wischleiste 12 auszutauschen (Fig. 3). Zur leichteren Montage sind an der Außenseite des Deckels 30 Griffrillen 56 vorgesehen. Die Wischleiste 12 besitzt als Tragelement zwei Federschienen 18 und 20 aus Federstahl, die in seitlichen Längsnuten zwischen der Wischlippe 14 und einer Kopfleiste 16 angeordnet sind. In einem mittleren Bereich umfasst der Spoiler 24 die Federschienen 18 und 20, während sie an den Enden von einer Brücke 22 zusammengehalten werden, die an ihren Seitenteilen an den Federschienen 18, 20 befestigt ist. Beim Wechsel wird die verschlissene
Wischleiste 12 aus den Federschienen 18, 20 herausgezogen und durch eine neue ersetzt.

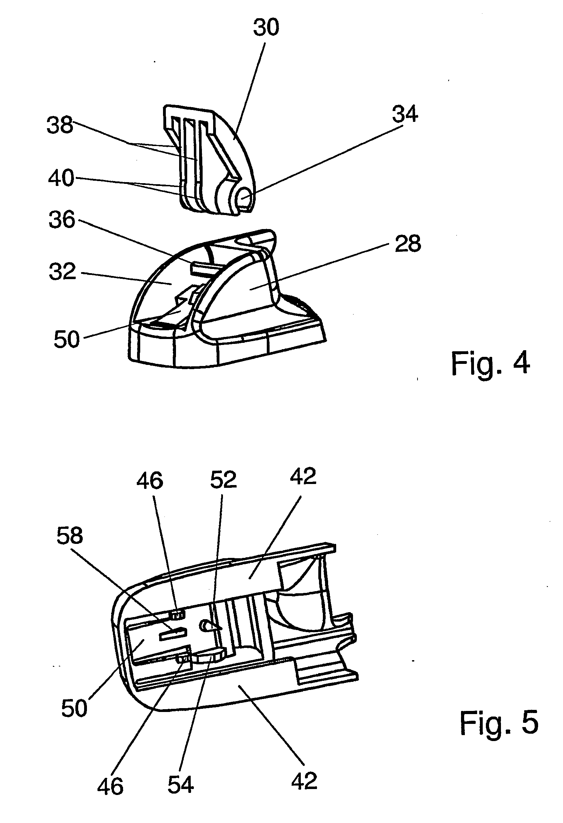

Danach wird das Basisteil 28 mit geöffnetem Deckel 30 auf das Ende der Wischleiste 12 gefügt, bis die Rasthaken 44 mit ihren Rastnasen 46 an der vom Ende des Wischblatts 10 abgewandten Seite der Brücke 22 verrasten. Jetzt ist das Basisteil 28 in Längsrichtung am Ende der Federschienen 18, 20 fixiert. Zum einfacheren Einfädeln und als Auflage auf den Federschienen 18 und 20 weist das Basisteil 28 an seiner Unterseite ein Führungsprofil 42 auf (Fig. 5). In einem zweiten Montageschritt wird der Deckel 30 in seine Verschlussposition geschwenkt. Der Deckel 30 besitzt an seiner inneren Seite zwei Rippen 38, die in einem Endbereich zu Nocken 40 ausgebildet sind und damit während der Schwenkbewegung mit zunehmendem Druck auf eine Federzunge 50 des Basisteils 28 wirken. Um einen symmetrischen Druck auf die Federzunge 50 zu ermöglichen und somit ein Verwinden auszuschließen, besteht zwischen den Rippen 38 ein axialer Zwischenraum, in den ein an der Federzunge 50 angeformter Führungssteg 48 eingreift.

An der der Kopfleiste 16 zugewandten Seite besitzt die Federzunge 50 einen Verriegelungsdorn 52, dessen Spitze beim Verschließen des Deckels 30 in die elastische Oberfläche der Kopfleiste 16 eingedrückt wird, sodass diese über die Endkappe 26 relativ zu den Federschienen 18 und 20 fixiert ist. Zudem verriegeln zwei seitlich an der Federzunge 50 angeformte Wangen 54 die Rasthaken 44. Diese unterstützen den Verriegelungsdorn 52 und können sich bei geschlossenem Deckel 30 nicht lösen. Mittig zwischen den Rastnasen 46 und im Bereich der vom Ende des Wischblatts 10 abgewandten Seite der Brücke 22 ist ein Demontagekeil 58 an der Federzunge 50 angeordnet. Da die Höhe des Demontagekeils 58 zum Ende des Wischblatts 10 abnimmt, unterstützt er das Abheben der Federzunge 50, wenn das Basisteil 28 vom Ende des Wischblatts 10 gezogen wird.

Das Basisteil 28 und der Deckel 30 bestehen vorzugsweise aus Kunststoff. Sie werden als Einzelbauteile in einem Spritzgussverfahren hergestellt und anschließend zur Endkappe 26 montiert (Fig. 4). Dazu weist der Deckel 30 stirnseitig eine offene Nabe 34 auf, die auf eine Achse 36 des Basisteils 28 gefügt wird. Die Achse 36 ist in einer Öffnung 32 oberhalb der Federzunge 50 angeordnet und bildet die Drehachse für die Schwenkbewegung des Deckels 30. Zweckmäßigerweise ist die Achse 36 abgeflacht, sodass die offene Nabe 34 nur in einer dem geöffneten Deckel 30 entsprechenden Stellung montierbar und in der Verschlussposition verriegelt ist.

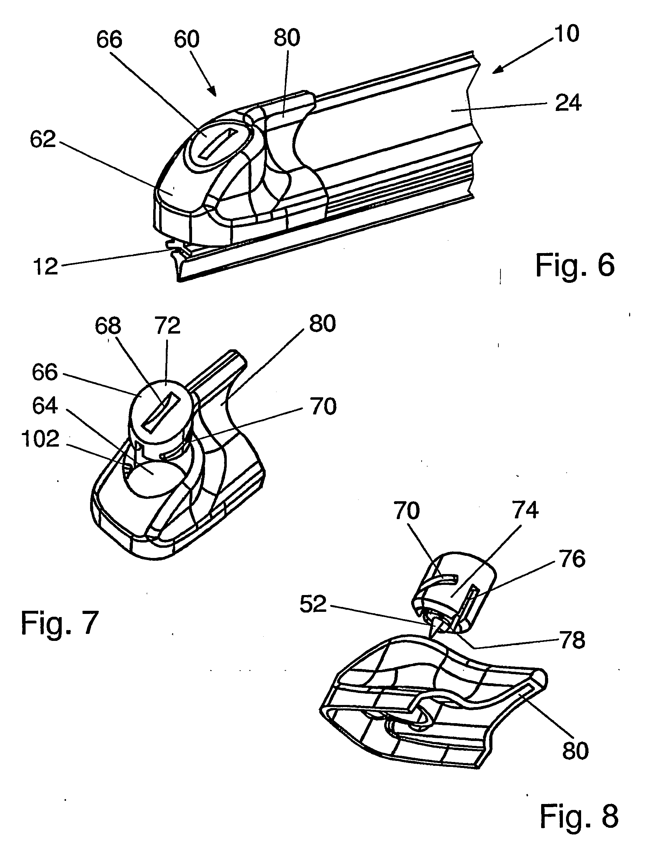

Die Ausführung nach Fig. 6 bis Fig. 10 weist eine Endkappe 60 auf, die aus einem Basisteil 62 mit einem eingeschraubten Stopfen 66 besteht (Fig.6). Im montierten Zustand deckt die Endkappe 60 das Ende des Wischblatts 10 und schließt sich mit einem Anschlussprofil 80 harmonisch und aerodynamisch günstig an den Spoiler 24 an. Der eingeschraubte Stopfen 66 befindet sich in der Verschlussposition. Der besitzt am Umfang ein Steilgewinde 70 (Fig. 7), das durch nutförmige Aussparungen gebildet wird, in die zwei an der Wand einer Aufnahmeöffnung 64 angeordnete Zapfen 102 einrasten. Zum Lösen mittels eines Schraubendrehers dient ein Schlitz 68 an einer äußeren Stirnfläche 72 des Stopfens 66. Die nutförmigen Aussparungen des Steilgewindes 70 sind in einem Mantel 74 vorgesehen, der einen zentrischen Kern 78 in einem Abstand umgibt und einen Längsschlitz 76 aufweist (Fig. 7). Der Mantel 74 wird zum Fügen des Stopfens 66 in die Aufnahmeöffnung 64 und zum Einfädeln der Zapfen 102 in die nutförmigen Aussparungen 70 am Umfang geringfügig zusammengedrückt.

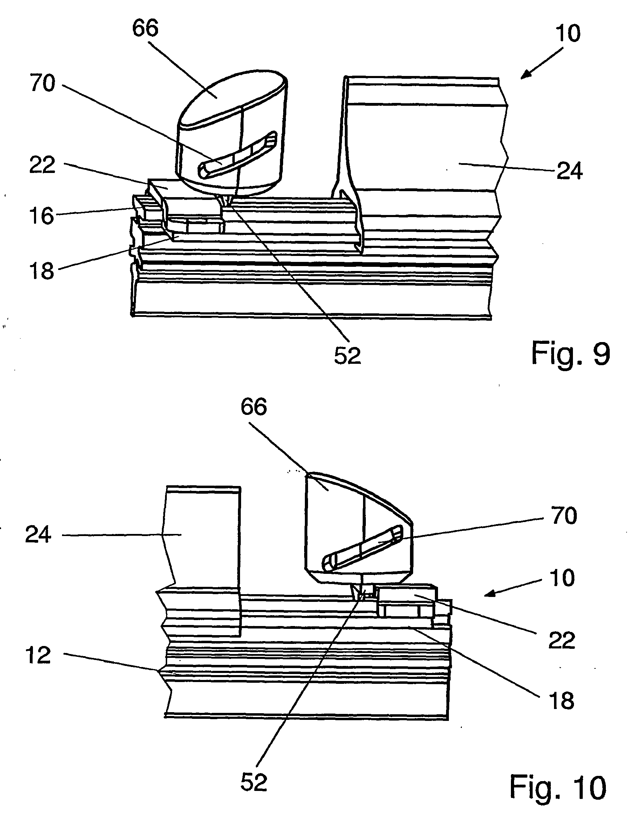

Zum Fixieren der Kopfleiste 16 relativ zur Endkappe 60 besitzt der Kern 78 des Stopfens einen Verriegelungsdorn 52, der an der der Kopfleiste 16 zugewandten Stirnseite angeordnet ist. Im montierten Zustand, wenn das Basisteil 82 mit der Stirnseite des Anschlussprofils 80 am Spoiler 24 anliegt und der Stopfen 66 in die Aufnahmeöffnung 64 eingeschraubt ist, greift die Spitze des Verriegelungsdorns 52 in die Kopfleiste 16 ein (Fig. 9). Zudem liegt die Mantelfläche des Verriegelungsdorns 52 an der Brücke 22 an und fixiert die Endkappe 60 am Ende der Wischleiste 14 relativ zu dieser und den Federschienen 18, 20 (Fig.10).

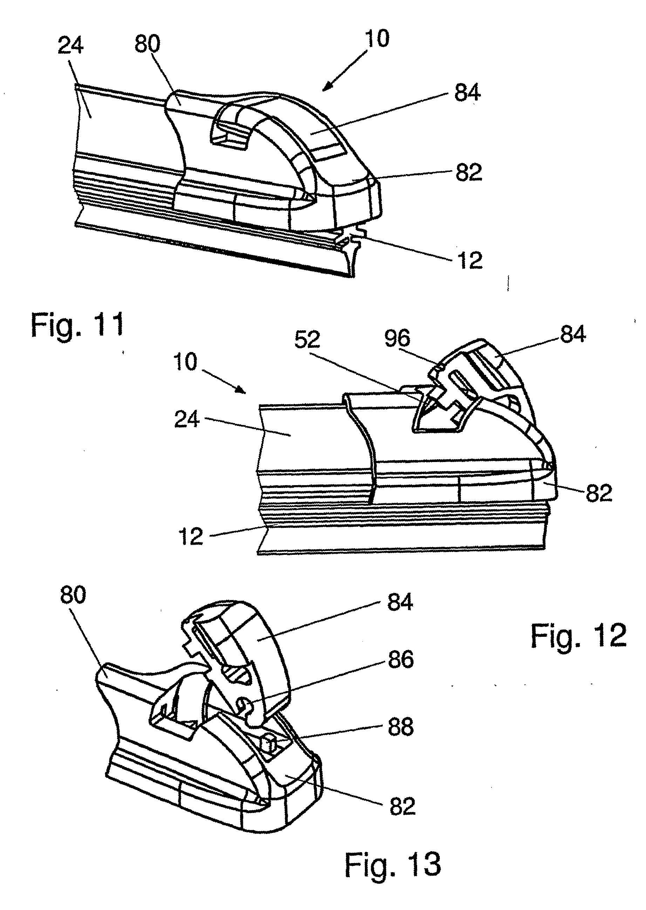

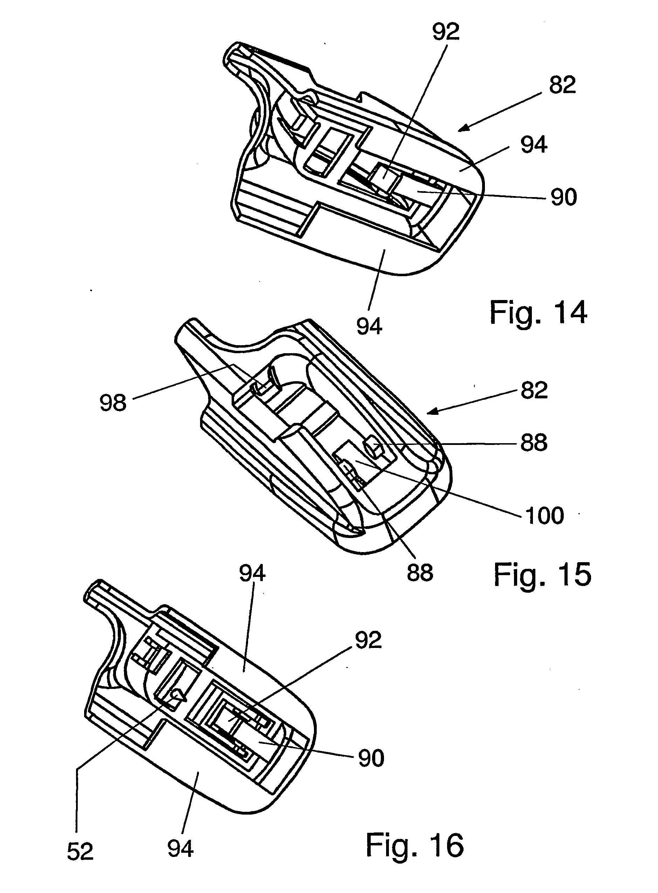

Eine Endkappe 81 stellt eine weitere Variante zur Endkappe 26 dar, die ein Basisteil 82 und einen Deckel 84 aufweist (Fig. 11). Zum Lösen der Endkappe 81 wird der Deckel 84 um ca. 45° aus dem Basisteil 82 geschwenkt (Fig.12). Dabei rastet ein Rastvorsprung 98 (Fig. 15) aus einer Rastvertiefung 96 (Fig. 12) und löst die Verriegelung des Deckels 84. Ferner gerät der Verriegelungsdorn 52 außer Eingriff, sodass die Wischleiste 12 nicht mehr fixiert ist und nach dem Demontieren der Endkappe 81 gewechselt werden kann.

Zur erneuten Montage wird zunächst das Basisteil vom Führungsprofil 94 geführt, auf das Ende des Wischblatts 10 gefügt bis ein Rasthaken 90 mit einer Rastnase 92 (Fig. 16) hinter der Brücke 22 der Federschienen 18 und 20 verrastet (Fig. 14). In einem zweiten Montageschritt wird der Deckel 84 geschlossen, wobei er mit der Innenseite über eine Anlagefläche 100 auf den Rasthaken 90 mit der Rastnase 92 drückt und den Rasthaken 90 verriegelt. Die Endkappe 81 ist jetzt am Ende der Wischleiste 12 einerseits relativ zu dieser durch den Verriegelungsdorn 52, der mit seiner Spitze in die elastische Oberfläche der Kopfleiste 16 eingreift, und andererseits durch den Rasthaken 90 relativ zu den Federschienen 18, 20 fixiert.

Das Basisteil 82 und der Deckel 84 sind schwenkbar miteinander verbunden. Dazu weist das Basisteil 82 als Drehachse zwei seitlich der Anlagefläche 100 angeordnete, abgeflachte Lagerzapfen 88 auf, sodass die offene Nabe 86 nur in einer geöffneten Position des Deckels 84 montierbar und in der Verschlussposition des Deckels 84 verriegelt ist.

## Patentansprüche

1. Wischblatt (10) mit einer gummielastischen Wischleiste (12), in deren seitliche Längsnuten Federschienen (18, 20) als Tragelemente eingesetzt sind, wobei die Federschienen (18, 20) anihren Enden zusammengehalten und relativ zur Wischleiste (12) in Längsrichtung fixiert sind sowie eine Endkappe (24) tragen, wobei die Endkappen (24) lösbare Fixiermittel (34) aufweisen, die in eine Kopfleiste (16) der Wischleiste (12) eingreifen, wobei die axiale Verschiebbarkeit der Federschienen (18, 20) relativ zur Wischleiste (24) durch die Endkappen begrenzt ist,
**dadurch gekennzeichnet, dass** ein Basisteil (28) der Endkappe (26, 81) zum Ende des Wischblatts (10) hin eine Öffnung (32) besitzt, die durch einen Deckel (30, 84) bzw. einen Stopfen (66) verschlossen ist, wobei beim Schließen des Deckels (30, 84) bzw. beim Einsetzen des Stopfens (66) ein Verriegelungsdorn (52) in die Kopfleiste (16) gedrückt wird.

2. Wischblatt (10) nach Anspruch 1, **dadurch gekennzeichnet, dass** der Verriegelungsdorn (52) an einer Unterseite einer Federzunge (50) angeordnet ist, die beim Schließen des Deckels (30) gegen die Kopfleiste (16) gedrückt wird.

3. Wischblatt (10) nach Anspruch 2, **dadurch gekennzeichnet, dass** der Deckel (30) schwenkbar auf einer Achse (36) gelagert ist und an seiner inneren Seite mindestens einen Nocken (40) aufweist, der bei der Schließbewegung des Deckels (30) auf die Federzunge (50) drückt und ein Maximum überschreitet.

4. Wischblatt (10) nach Anspruch **3, dadurch gekennzeichnet, dass** zwei Nocken (40) in einem axialen Abstand voneinander angeordnet sind, zwischen denen ein Fügungssteg (48) geführt ist, der auf der den Nocken (40) zugewandten Seite.der Federzunge (50) mit dieser fest verbunden ist.

5. Wischblatt (10) nach einem der Ansprüche 2 bis 4, **dadurch gekennzeichnet, dass** die Federzunge (50) auf der der Kopfleiste (16) zugewandten Seite einen Demontagekeil (58) aufweist, der in seiner Höhe zum Ende des Wischblatts (10) abnimmt.

6. Wischblatt (10) nach einem der vorhergehenden Ansprüche, **dadurch gekennzeichnet, dass** das Basisteil (28, 82) mindestens einen Rasthaken (44, 90) besitzt, der mit einer Rastnase (46, 92) an der vom Ende des Wischblatts (10) abgewandten Seite der Brücke (22) verrastet.

7. Wischblatt (10) nach Anspruch 7, **dadurch gekennzeichnet, dass** der Rasthaken (44, 90) in der Rastposition durch den Deckel (30, 84) verriegelt ist.

8. Wischblatt (10) nach einem der Ansprüche 3 bis 7, **dadurch gekennzeichnet, dass** der Deckel (30, 84) eine offene Nabe (34, 86) besitzt, die mit einer abgeflachten Achse (36) bzw. mit abgeflachten Lagerzapfen (88) so zusammenwirkt, dass die Nabe (34, 86) in geöffneter Position montierbar und in geschlossener Position verriegelt ist.

9. Wischblatt (10) nach einem der Ansprüche 6 bis 8, **dadurch gekennzeichnet, dass** der Verriegelungsdorn (52) an der Unterseite des Deckels (84) angeordnet ist.

10. Wischblatt (10) nach einem der Ansprüche 6 bis 9, **dadurch gekennzeichnet, dass** der Deckel (30, 84) an dem der offenen Nabe (34, 86) abgewandten Ende mit dem Basisteil (28, 82) verrastbar ist.

11. Wischblatt (10) nach Anspruch 1, **dadurch gekennzeichnet, dass** der Stopfen (66) an seinem Umfang ein Steilgewinde (70) besitzt, in das ein an der Wand der Aufnahmeöffnung (64) vorgesehenes Gegenstück (102) eingreift.

12. Wischblatt (10) nach Anspruch 11, **dadurch gekennzeichnet, dass** der Stopfen (66) einen Kern (78) besitzt, an dem der Verriegelungsdorn (52) angeordnet und von einem Mantel (74) mit einem Abstand umgeben ist, der einen Längsschlitz (76) aufweist und in dem das Steilgewinde (70) vorgesehen ist.

13. Wischblatt (10) nach Anspruch 11 oder 12, **dadurch gekennzeichnet, dass** das Steilgewinde (70) durch eine nutenförmige Aussparung gebildet wird, in die ein Zapfen (102) einrastet.

14. Wischblatt (10) nach einem der Ansprüche 11 bis 13, **dadurch gekennzeichnet, dass** die Aufnahmeöffnung (64) so angeordnet ist, dass der Verriegelungsdorn (52) des Stopfens (66) in montierter Position der Endkappe (81) an der Seite einer Brücke (22) anliegt, die dem Ende des Wischblatts (10) abgewandt ist und die Brücke (22) an ihren Seitenteilen mit den Federschienen (18, 20) fest verbunden ist.

## Claims

1. Wiper blade (10) with a rubber-elastic wiper strip (12), into the lateral longitudinal grooves of which spring rails (18, 20) are inserted as supporting elements, wherein the spring rails (18, 20) are held together at their ends and are fixed in the longitudinal direction relative to the wiper strip (12) and bear an end cap (24), wherein the end caps (24) have releasable fixing means (34) which engage in a top strip (16) of the wiper strip (12), wherein the axial displaceability of the spring rails (18, 20) relative to the wiper strip is limited by the end caps (24), **characterized in that** a base part (28) of the end cap (26, 81) has, towards the end of the wiper blade (10), an opening (32) which is closed by a cover (30, 84) or a stopper (66), with a locking spike (52) being pressed into the top strip (16) when the cover (30, 84) is closed or the stopper (66) is inserted.

2. Wiper blade (10) according to Claim 1,
**characterized in that** the locking spike (52) is arranged on a lower side of a spring tongue (50) which is pressed against the top strip (16) when the cover (30) is closed.

3. Wiper blade (10) according to Claim 2,
**characterized in that** the cover (30) is mounted pivotably on a spindle (36) and, on its inner side, has at least one cam (40) which presses onto the spring tongue (50) and exceeds a maximum during the closing movement of the cover (30).

4. Wiper blade (10) according to Claim 3,
**characterized in that** two cams (40) are arranged at an axial distance from each other and a joining web (48) is guided between them, said joining web being connected fixedly to the spring tongue (50) on that side thereof which faces the cams (40).

5. Wiper blade (10) according to one of Claims 2 to 4, **characterized in that** the spring tongue (50) has, on the side facing the top strip (16), a removal wedge (58) which decreases in its height towards the end of the wiper blade (10).

6. Wiper blade (10) according to one of the preceding claims, **characterized in that** the base part (28, 82) has at least one latching hook (44, 90) which latches to a latching lug (46, 92) on that side of the bridge (22) which faces away from the end of the wiper blade (10).

7. Wiper blade (10) according to Claim 6,
**characterized in that** the latching hook (44, 90) is locked in the latching position by the cover (30, 84).

8. Wiper blade (10) according to one of Claims 3 to 7, **characterized in that** the cover (30, 84) has an open hub (34, 86) which interacts with a flattened spindle (36) or with flattened bearing journals (88) in such a manner that the hub (34, 86) can be fitted in an open position and is locked in a closed position.

9. Wiper blade (10) according to one of Claims 6 to 8, **characterized in that** the locking spike (52) is arranged on the lower side of the cover (84).

10. Wiper blade (10) according to one of Claims 6 to 9, **characterized in that** the cover (30, 84) can be latched at the end facing away from the open hub (34, 86) to the base part (28, 82).

11. Wiper blade (10) according to Claim 1,
**characterized in that** the periphery of the stopper (66) has a quick-acting screw thread (70) in which a counterpart (102) provided on the wall of the receiving opening (64) engages.

12. Wiper blade (10) according to Claim 11,
**characterized in that** the stopper (66) has a core (78) on which the locking spike (52) is arranged and which is surrounded at a distance by a casing (74) which has a longitudinal slot (76) and in which the quick-acting screw thread (70) is provided.

13. Wiper blade (10) according to Claim 11 or 12, **characterized in that** the quick-acting screw thread (70) is formed by a groove-shaped cutout into which a journal (102) latches.

14. Wiper blade (10) according to one of Claims 11 to 13, **characterized in that** the receiving opening (64) is arranged in such a manner that, in the fitted position of the end cap (81), the locking spike (52) of the stopper (66) bears against that side of a bridge (22) which faces away from the end of the wiper blade (10), and the bridge (22) is connected fixedly at its side parts to the spring rails (18, 20).

## Revendications

1. Balai d'essuie-glace (10) comprenant une raclette de balai d'essuie-glace (12), dans les rainures longitudinales latérales de laquelle sont insérés des rails élastiques (18, 20) servant d'éléments de support, les rails élastiques (18, 20) étant maintenus ensemble à leurs extrémités et étant fixés dans la direction longitudinale par rapport à la raclette de balai d'essuie-glace (12) et portant un capuchon d'extrémité (24), les capuchons d'extrémité (24) présentant des moyens de fixation amovibles (34) qui viennent en prise dans une raclette de tête (16) de la raclette de balai d'essuie-glace (12), la mobilité axiale des rails élastiques (18, 20) étant limitée par rapport à la raclette de balai d'essuie-glace par les capuchons d'extrémité (24), **caractérisé en ce qu'**une partie de base (28) du capuchon d'extrémité (26, 81) possède une ouverture (32) vers l'extrémité du balai d'essuie-glace (10), laquelle est fermée par un couvercle (30, 84) ou un bouchon (66), un mandrin de verrouillage (52) étant poussé dans la raclette de tête (16) lors de la fermeture du couvercle (30, 84) ou de l'insertion du bouchon (66).

2. Balai d'essuie-glace (10) selon la revendication 1, **caractérisé en ce que** le mandrin de verrouillage (52) est disposé sur un côté inférieur d'une langue élastique (50), qui est pressée contre la raclette de tête (16) lors de la fermeture du couvercle (30).

3. Balai d'essuie-glace (10) selon la revendication 2, **caractérisé en ce que** le couvercle (30) est monté de manière à pouvoir pivoter autour d'un axe (36), et présente sur son côté intérieur au moins une came (40) qui presse sur la langue élastique (50) lors du mouvement de fermeture du couvercle (30) et dépasse un maximum.

4. Balai d'essuie-glace (10) selon la revendication 3, **caractérisé en ce que** deux cames (40) sont disposées à distance axiale l'une de l'autre, un ergot d'assemblage (48) étant guidé entre elles et étant connecté à la langue élastique (50) du côté de la langue élastique (50) tourné vers les cames (40).

5. Balai d'essuie-glace (10) selon l'une quelconque des revendications 2 à 4, **caractérisé en ce que** la langue élastique (50) présente, du côté tourné vers la raclette de tête (16), une clavette de démontage (58) dont la hauteur diminue jusqu'à l'extrémité du balai d'essuie-glace (10).

6. Balai d'essuie-glace (10) selon l'une quelconque des revendications précédentes, **caractérisé en ce que** la partie de base (28, 82) présente au moins un crochet d'encliquetage (44, 90) qui s'encliquète avec un nez d'encliquetage (46, 92) du côté du pont (22) opposé à l'extrémité du balai d'essuie-glace (10).

7. Balai d'essuie-glace (10) selon la revendication 6, **caractérisé en ce que** le crochet d'encliquetage (44, 90) est verrouillé dans la position encliquetée par le couvercle (30, 84).

8. Balai d'essuie-glace (10) selon l'une quelconque des revendications 3 à 7, **caractérisé en ce que** le couvercle (30, 84) présente un moyeu ouvert (34, 86), qui coopère avec un axe aplati (36) ou avec un tourillon de palier aplati (88) de telle sorte que le moyeu (34, 86) puisse être monté dans la position ouverte et soit verrouillé dans la position fermée.

9. Balai d'essuie-glace (10) selon l'une quelconque des revendications 6 à 8, **caractérisé en ce que** le mandrin de verrouillage (52) est disposé sur le côté inférieur du couvercle (84).

10. Balai d'essuie-glace (10) selon l'une quelconque des revendications 6 à 9, **caractérisé en ce que** le couvercle (30, 84) peut s'encliqueter à l'extrémité opposée au moyeu ouvert (34, 86) avec la partie de base (28, 82).

11. Balai d'essuie-glace (10) selon la revendication 1, **caractérisé en ce que** le bouchon (66) présente sur sa périphérie un filetage à pas rapide (70) dans lequel vient en prise une pièce conjuguée (102) prévue sur la paroi de l'ouverture de réception (64).

12. Balai d'essuie-glace (10) selon la revendication 11, **caractérisé en ce que** le bouchon (66) possède un noyau (78) sur lequel est disposé le mandrin de verrouillage (52), et qui est entouré à une certaine distance par une enveloppe (74) qui présente une fente longitudinale (76) et dans laquelle est prévu le filetage à pas rapide (70).

13. Balai d'essuie-glace (10) selon les revendications 11 ou 12, **caractérisé en ce que** le filetage à pas rapide (70) est formé par un évidement en forme de rainure dans lequel s'encliquète un tourillon (102).

14. Balai d'essuie-glace (10) selon l'une quelconque des revendications 11 à 13, **caractérisé en ce que** l'ouverture de réception (64) est disposée de telle sorte que le mandrin de verrouillage (52) du bouchon (66), dans la position montée du capuchon d'extrémité (81), s'applique contre le côté d'un pont (22) qui est opposé à l'extrémité du balai d'essuie-glace (10), et le pont (22) étant connecté fixement au niveau de ses parties latérales aux rails élastiques (18, 20).
